# EUROPÄISCHE PATENTSCHRIFT

(11) **EP 4 449 082 B1**
(45) Veröffentlichungstag und Bekanntmachung des Hinweises auf die Patenterteilung: **11.11.2026**
(21) Anmeldenummer: 22822955.5
(22) Anmeldetag: 28.11.2022
(51) Int. Cl.: G01L 13/02, G01L 19/06, G01L 19/14

(54) **RELATIVDRUCKMESSAUFNEHMER ZUR BESTIMMUNG EINES ERSTEN DRUCKS EINES MEDIUMS**
RELATIVE PRESSURE MEASUREMENT RECORDER FOR DETERMINING A FIRST PRESSURE OF A MEDIUM
ENREGISTREUR DE MESURE DE PRESSION RELATIVE PERMETTANT DE DÉTERMINER UNE PREMIÈRE PRESSION D'UN MILIEU

(30) Priorität: 15.12.2021 DE 102021133183
(43) Veröffentlichungstag der Anmeldung: 23.10.2024
(73) Patentinhaber: Endress+Hauser SE+Co. KG, 79689 Maulburg (DE)
(72) Erfinder: BECHER, Raimund, 79238 Ehrenkirchen (DE); BEDNER, Kristine, 79650 Schopfheim (DE); ANDERS, Tobias, 79618 Rheinfelden (DE)
(74) Vertreter: Endress + Hauser Group Services (Deutschland) AG+Co. KG
(86) Internationale Anmeldenummer: PCT/EP2022/083519
(87) Internationale Veröffentlichungsnummer: WO 2023/110380

(56) Entgegenhaltungen:
- EP-A2- 1 275 950
- DE-A1- 102010 003 709
- DE-A1- 102016 124 024
- DE-A1- 102019 130 569
- DE-A1- 102019 132 724

## Beschreibung

Die Erfindung betrifft einen Relativdruckmessaufnehmer zur Bestimmung eines ersten Drucks eines Mediums.

In der Druckmesstechnik sind Absolutdruck-, Differenzdruck- und Relativdruckmessaufnehmer bekannt. Absolutdruckmessaufnehmer bestimmen den vorherrschenden Druck absolut, d. h. in Bezug auf Vakuum, während Differenzmessaufnehmer die Differenz zwischen zwei unterschiedlichen Drücken bestimmen. Bei Relativdruckmessaufnehmer wird der zu messende Druck gegenüber einem Referenzdruck bestimmt, wobei der in der Umgebung des Relativdruckmessaufnehmer vorherrschende Atmosphärendruck als Referenzdruck dient.

Relativdruckmessaufnehmer weisen ein druckempfindliches Messelement auf, den sogenannten Drucksensor, so dass auf eine erste Fläche des Messelements der zu messende Druck des Mediums einwirkt. Auf eine zweite Fläche des Messelements wirkt der Atmosphärendruck ein, welcher dem Messelement mittels einer Referenzdruckzuführung aus der Umgebung zugeführt wird. Das Messelement verbiegt sich in Abhängigkeit des vorliegenden Relativdrucks, welcher aus der Differenz zwischen dem zu messenden Druck des Medius und dem Atmosphärendruck gebildet wird. Diese Verbiegung wird mittels einer Elektronikeinheit in ein vom Relativdruck abhängiges elektrisches Signal umgewandelt, das dann zur weiteren Verarbeitung oder Auswertung zur Verfügung steht. Dabei wird unter anderem zwischen kapazitiven und piezoresistiven Drucksensoren unterschieden. Eine Vielzahl solcher Relativdruckmessaufnehmer wird von Firmen der Endress+Hauser-Gruppe hergestellt und vertrieben.

Häufig werden Relativdruckmessaufnehmer in industriellen Prozessen eingesetzt, in denen sie hohen Temperaturschwankungen und -differenzen zwischen Prozess und Umgebung ausgesetzt sind. Bei plötzlicher Abkühlung kann der Taupunkt der Luft in einem Innenraum des Relativdruckmessaufnehmer überschritten werden, was zur Kondensation der Luftfeuchtigkeit auf kalten Teilen innerhalb des Relativdruckmessaufnehmer führt. Die Luftfeuchtigkeit kann insbesondere durch die Öffnung des Relativdruckmessaufnehmers zur Umgebung, welche zum Bereitstellen des Referenzdrucks für das Messelement notwendig ist, und durch die Referenzdruckzuführung in den Relativdruckmessaufnehmer gelangen. Zudem werden die Relativdruckmessaufnehmer insbesondere im der Pharma- und der Lebensmittelindustrie häufig mit Wasserdruck gereinigt. In solchen Fällen ist es besonders wichtig, dass das zur Reinigung genutzte Wasser nicht in das Innere des Relativdruckmessaufnehmers eindringen kann.

Der Drucksensor und die Elektronikeinheit sind in der Regel sehr empfindlich gegenüber Feuchtigkeit. In der Folge von Feuchtigkeit können beispielsweise Hystereseeffekte am Drucksensor auftreten. Für eine zuverlässige Bestimmung des Drucks muss folglich sichergestellt sein, dass innerhalb des Relativdruckmessaufnehmers keine oder nur wenig Feuchtigkeit eintritt oder kondensiert. Im Idealfall ist der Relativdruckmessaufnehmer und speziell die Referenzdruckzuführung so aufgebaut, dass lediglich trockene Luft zum Drucksensor und zur Auswerteeinheit gelangt. In der Regel führt die Referenzdruckzuführung den Umgebungsdruck von einer Öffnung im Relativdruckmessaufnehmer, welche häufig im Gehäuse des Relativdruckmessaufnehmers angeordnet ist, zu dem Drucksensor. Teilweise ist zwischen der Öffnung und dem Drucksensor eine Trocknungskammer mit einem feuchteadsorbierenden Material angeordnet, welches der zugeführten Umgebungsluft aus der Referenzdruckzuführung Feuchtigkeit entzieht und die Umgebungsluft so trocknet.

Relativdruckmessaufnehmer sind u.a. aus den Patentanmeldungen DE 10 2016 124 024 A1, EP 1 275 950 A2, DE 10 2019 132 724 A1 und DE 10 2010 003 709 A1 bekannt geworden.

Die Aufgabe der vorliegenden Erfindung ist es daher, einen Relativdruckmessaufnehmer bereitzustellen, in dessen Innenraum selbst bei einer Reinigung mit Wasserdruck keine Feuchtigkeit eindringt.

**Die Aufgabe** wird erfindungsgemäß gelöst durch einen Relativdruckmessaufnehmer zur Bestimmung eines ersten Drucks eines Mediums, mit
- einem Prozessadapter mit einem Grundkörper,
   ∘ wobei in einem ersten, dem Medium zugewandten Endbereich des Grundkörpers eine druckempfindliche Prozessmembran vorgesehen ist, wobei der Grundkörper eine erste Druckübertragungsleitung aufweist, welche dazu ausgestaltet ist, den ersten Druck des Mediums von der Prozessmembran zu einem in einer Ausnehmung des Grundkörpers angeordneten Drucksensor zu führen und eine erste Fläche des Drucksensors mit dem ersten Druck des Mediums zu beaufschlagen,
   ∘ wobei in einem zweiten, vom Medium beabstandeten Bereich des Grundkörpers eine druckempfindliche Referenzdruckmembran vorgesehen ist, welche mit einem in der Umgebung des Relativdruckmessaufnehmers vorhandenen Referenzdruck beaufschlagt ist, wobei der Grundkörper eine zweite Druckübertragungsleitung aufweist, welche dazu ausgestaltet ist, den Referenzdruck von der Referenzdruckmembran zum Drucksensor zu führen und eine zweite Fläche des Drucksensors mit dem Referenzdruck zu beaufschlagen, und
- einem Gehäuseadapter, welcher dazu ausgestaltet ist, den Prozessadapter zumindest im Bereich der Referenzdruckmembran zu umgeben und in zumindest einem Verbindungsbereich mit dem Prozessadapter verbunden ist,
   ∘ wobei der Gehäuseadapter derart zum Prozessadapter angeordnet ist, dass im Bereich der Referenzdruckmembran ein Zwischenraum zwischen dem Gehäuseadapter und dem Prozessadapter gebildet ist,
   ∘ wobei eine Durchgangsbohrung im Gehäuseadapter angeordnet ist, welche den Zwischenraum mit der Umgebung des Relativdruckmessaufnehmers verbindet.

Erfindungsgemäß wird der Referenzdruck über die Referenzdruckmembran bereitgestellt und mittels der zweiten Druckübertragungsleitung an die zweite Fläche des Drucksensors übertragen. Sowohl die erste Druckübertragungsleitung als auch die zweite Druckübertragungsleitung sind hydraulisch ausgestaltet und in der Regel mit einem Silikonöl oder einem synthetischen Öl befüllt. Feuchtigkeit aus der Umgebung des Relativdruckmessaufnehmers kann nicht in einen Innenraum des Relativdruckmessaufnehmers eintreten, da die Referenzdruckmembran ein Eintreten der Umgebungsluft und der damit verbundenen Feuchtigkeit verhindert. Somit gelangt keine Feuchtigkeit an den Drucksensor.

Die Referenzdruckmembran ist beispielsweise eine metallische Membran. Auch der Prozessadapter und der Gehäuseadapter sind in der Regel aus einem Metall gefertigt. Zur Vermeidung von Hystereseeffekten des Drucksensors bietet es sich an, dass sowohl der Prozessadapter als auch der Gehäuseadapter aus demselben Metall gefertigt sind. Es können jedoch auch unterschiedliche Metalle zum Einsatz kommen.

Die Referenzdruckmembran ist für die Umgebungsluft mittels der Durchgangsbohrung des Gehäuseadapters zugänglich. Gleichzeitig wird die Referenzdruckmembran durch den sie umgebenden Gehäuseadapter vor mechanischen Einflüssen geschützt. Eine freiliegende, ungeschützte Referenzdruckmembran würde bei einer Reinigung mit Wasserdruck stark verformt werden (beispielsweise ist ein Wasserdruck von 100 bar üblich) und wäre somit nicht mehr einsetzbar. Damit die Referenzdruckmembran auch bei variierenden Drücken nicht an dem Gehäuseadapter anliegt, ist ein Zwischenraum zwischen Referenzdruckmembran bzw. Prozessadapter und Gehäuseadapter vorgesehen. Sowohl die Prozessmembran als auch die Referenzdruckmembran weisen ein jeweiliges Membranbett auf, in dem die Prozessmembran und die Referenzdruckmembran jeweils anliegen, wenn ein erster Druck oder ein zweiter Druck anliegt, welcher einen vorgegebenen Grenzwert überschreitet.

Der erfindungsgemäße Relativdruckmessaufnehmer besteht somit im Wesentlichen aus zwei Grundteilen, dem Prozessadapter und dem Gehäuseadapter, wobei drei weitere Komponenten, der Drucksensor, die Prozessmembran und die Referenzdruckmembran, in oder an den beiden Grundteilen angeordnet sind. Aufgrund der geringen Zahl an Grundteilen und Komponenten ist der erfindungsgemäße Relativdruckmessaufnehmer auf einfache Weise herstellbar.

**In** einer Ausgestaltung ist ein feuchteundurchlässiges Filterelement in der Durchgangsbohrung angeordnet. Das Filterelement verhindert das Eintreten von Feuchtigkeit in den Zwischenraum und lässt lediglich den Referenzdruck in Form von Umgebungsluft zur Referenzdruckmembran gelangen.

Bevorzugterweise ist ein feuchteadsorbierendes Material im Zwischenraum angeordnet. Das feuchteadsorbierende Material füllt den Zwischenraum zumindest teilweise aus und nimmt Feuchtigkeit aus der im Zwischenraum vorhandenen Umgebungsluft auf.

Insbesondere ist als feuchteadsorbierendes Material ein Formkörper vorgesehen, welcher eine Polymermatrix und Zeolith umfasst. Der Formkörper wird aus der Polymermatrix und Zeolith hergestellt und kann in Abhängigkeit der Ausgestaltung des Zwischenraums ausgestaltet sein. Der Formkörper kann auch ein Sinter- oder Kompositkörper sein.

**In** einer Weiterbildung ist die Referenzdruckmembran im Wesentlichen senkrecht zur Prozessmembran an einer Seitenfläche des Grundkörpers des Prozessadapters angeordnet. Eine solche Anordnung von Referenzdruckmembran und Prozessmembran ermöglicht einen kompakten Aufbau des Relativdruckmessaufnehmers.

**In** einer Ausgestaltung weist der Prozessadapter einen ersten Anschlussbereich auf, welcher für eine Verbindung mit einem Prozessanschluss ausgestaltet ist. Der Prozessanschluss kann beispielsweise mittels einer Schweißung oder einem Flansch mit dem Prozessadapter verbunden sein. **In** der Regel wird der Prozessanschluss in Abhängigkeit von den vorliegenden Prozessbedingungen wie beispielsweise dem Behälter, an dem der Relativdruckmessaufnehmer angebracht werden soll, gewählt.

Erfindungsgemäß weist der Gehäuseadapter einen zweiten Anschlussbereich auf, welcher für eine Verbindung mit einem Gehäuse ausgestaltet ist. Das Gehäuse ist in der Regel derart ausgestaltet, dass die in dem Gehäuse befindlichen Komponenten vor mechanischen Einflüssen geschützt sind. Darüber hinaus kann das Gehäuse weitere Funktionalitäten bieten, wie z.B. ein am Gehäuse vorgesehenes Display.

Vorzugsweise ist ein elektrisch isolierend ausgestaltetes Durchführungselement benachbart zu der mit dem Referenzdruck beaufschlagten zweiten Fläche des Drucksensors angeordnet, wobei die zweite Druckübertragungsleitung durch das Durchführungselement führt. Durch das Durchführungselement sind elektrische Leitungen zum Drucksensor hindurchgeführt.

Insbesondere ist das Durchführungselement eine Glas-Metall-Durchführung.

Bevorzugt ist ein Ausrichtungselement vorgesehen, welches derart angeordnet und ausgestaltet ist, dass das Durchführungselement relativ zum Grundkörper mittels des Ausrichtungselements ausrichtbar ist. Da ein Abschnitt der zweiten Druckübertragungsleitung durch das Durchführungselement verläuft, muss beim Verbinden des Durchführungselements mit dem Prozessanschluss eine vorgegebene Ausrichtung des Durchführungselements sichergestellt sein. In der vorgegebenen Ausrichtung des Durchführungselements fluchtet der durch das Durchführungselement verlaufende Abschnitt der zweiten Druckübertragungsleitung mit einem durch den Prozessadapter verlaufenden Abschnitt der zweiten Druckübertragungsleitung.

Insbesondere ist das Ausrichtungselement ein Stift. Der Stift ist beispielsweise teilweise im Prozessadapter und teilweise im Durchführungselement angeordnet, so dass das Durchführungselement nur in einer vorgegebenen Ausrichtung in den Prozessadapter eingesetzt werden kann.

Das Ausrichtungselement kann alternativ beispielsweise eine Nase, ein Vorsprung, ein Absatz oder eine Kante sein, wobei ein an das Ausrichtungselement angrenzender Bereich korrespondierend zum Ausrichtungselement ausgestaltet ist. Das Ausrichtungselement kann auch am Prozessadapter oder an einem Füllkörper, dem sogenannten Verdrängungskörper, auf welchen der Drucksensor in der Regel angeordnet ist, angeordnet sein.

In einer Ausgestaltung ist in einer Ausnehmung des Gehäuseadapters mindestens eine Elektronikeinheit angeordnet. Die mindestens eine Elektronikeinheit ist in der Regel über das Durchführungselement mit dem Drucksensor elektrisch verbunden.

In einer weiteren Ausgestaltung sind die Prozessmembran und/oder die Referenzdruckmembran jeweils mittels einer Schweißung mit dem Grundkörper verbunden.

In einer Weiterbildung ist der Gehäuseadapter in dem zumindest einem Verbindungsbereich gasdicht mit dem Prozessadapter verbunden. Die Gasdichtigkeit wird beispielsweise mittels mindestens einer Schweißung erreicht.

Im Weiteren soll die Erfindung anhand der nachfolgenden Figuren Fig. 1-2 näher erläutert werden. Sie zeigen:
Fig. 1: eine erste Ausgestaltung des erfindungsgemäßen Relativdruckmessaufnehmers.
Fig. 2: eine zweite Ausgestaltung des erfindungsgemäßen Relativdruckmessaufnehmers.

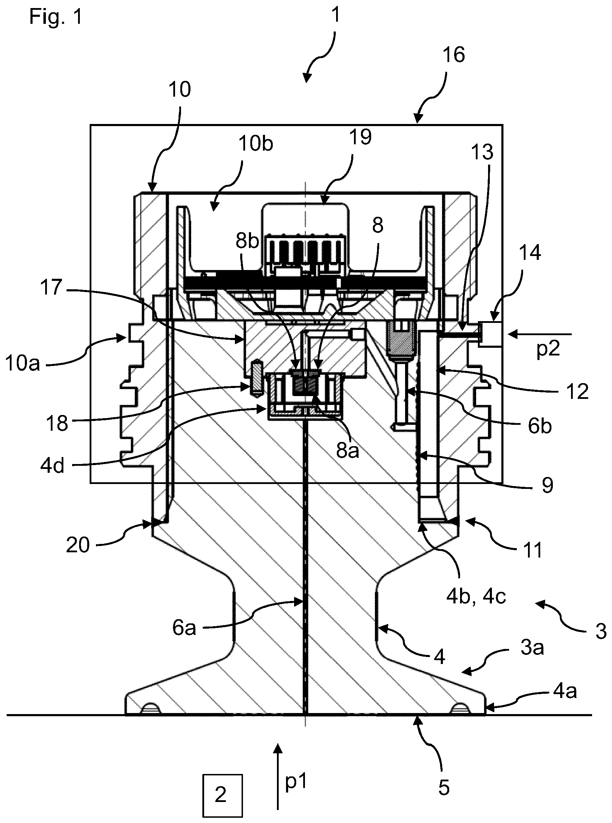

Eine erste Ausgestaltung eines erfindungsgemäßen Relativdruckmessaufnehmers 1 ist in Fig. 1 gezeigt. Der Relativdruckmessaufnehmer 1 weist zwei Grundteile, den Prozessadapter 3 mit einem Grundkörper 4 und den Gehäuseadapter 10 auf, welche in zumindest einem Verbindungsbereich 11 miteinander, insbesondere gasdicht, verbunden sind, beispielsweise mit einer Schweißung 20. Der Prozessadapter 3 weist einen optionalen ersten Anschlussbereich 3a auf, welcher für eine Verbindung mit einem Prozessanschluss (nicht gezeigt) ausgestaltet ist, so dass der Relativdruckmessaufnehmer 1 an einer gewünschten Messstelle angebracht werden kann. Der Gehäuseadapter 10 weist ferner einen zweiten Anschlussbereich 10a auf, welcher für eine Verbindung mit einem (vereinfacht dargestellten) Gehäuse 16 ausgestaltet ist.

In einem ersten, dem Medium 2 zugewandten Endbereich des Grundkörpers 4 des Prozessadapter 3 ist eine druckempfindliche Prozessmembran 5 angeordnet, welche mit einem ersten Druck p1 des Mediums 2 beaufschlagt ist. In einem zweiten, vom Medium 2 beabstandeten Bereich 4b des Grundkörpers 4 ist eine druckempfindliche Referenzdruckmembran 9 angeordnet, welche mit einem in der Umgebung des Relativdruckmessaufnehmers 1 vorhandenen Referenzdruck p2 beaufschlagt ist. Die Prozessmembran 5 und/oder die Referenzmembran 9 sind beispielsweise mittels einer Schweißung mit dem Grundkörper 4 verbunden. Die Referenzdruckmembran 9 ist beispielhaft im Wesentlichen senkrecht zur Prozessmembran 5 an einer Seitenfläche 4c des Grundkörpers 4 angeordnet. Der erste Druck p1 und der Referenzdruck p2 werden mittels einer ersten Druckübertragungsleitung 6a und einer zweiten Druckübertragungsleitung 6b von der Prozessmembran 5 bzw. von der Referenzdruckmembran 9 an den Drucksensor 8 geführt, so dass der Drucksensor 8 auf einer ersten Fläche 8a mit dem ersten Druck p1 und auf einer der ersten Fläche 8a gegenüberliegenden, zweiten Fläche 8b mit dem Referenzdruck p2 beaufschlagt ist. Der Drucksensor 8 ist in einer Ausnehmung 4d des Grundkörpers 4 angeordnet. Die erste Druckübertragungsleitung 6a und die zweit Druckübertragungsleitung 6b werden beispielsweise über separate Befüllöffnungen oder Befüllröhrchen mit der Druckübertragungsflüssigkeit befüllt.

Benachbart zu der zweiten Fläche 8b des Drucksensor 8 ist ein optionales Durchführungselement 17 vorgesehen, welches elektrisch isolierend ausgestaltet ist und zur Führung von elektrischen Leitungen zum Drucksensor 8 dient. Die elektrischen Leitungen führen vom Drucksensor 8 durch das Durchführungselement 17 beispielsweise in mindestens eine Elektronikeinheit 19, welche optional in einer Ausnehmung 10b des Gehäuseadapter 10 angeordnet ist. Die zweite Druckübertragungsleitung 6b verläuft teilweise durch das Durchführungselement 17, welches beispielsweise eine Glas-Metall-Durchführung ist. Zur Abdichtung der zweiten Druckübertragungsleitung 6b gegenüber der ersten Druckübertragungsleitung 6a kann die zweite Druckübertragungsleitung 6b mittels eines Schweißverfahrens derart verschweißt sein, dass die Schweißnaht an die zweite Druckübertragungsleitung 6b anschließt, ohne diese zu verschließen.

Um den durch den Prozessadapter 3 verlaufenden Abschnitt der zweiten Druckübertragungsleitung 6b mit dem durch das Durchführungselement 17 verlaufenden Abschnitt der zweiten Druckübertragungsleitung 6b aufeinander auszurichten bzw. miteinander zu fluchten, kann ein Ausrichtungselement 18 angeordnet sein. Das Ausrichtungselement 18 ist beispielsweise ein Stift und ist derart ausgestaltet und angeordnet, dass das Durchführungselement 17 relativ zum Grundkörper 4 mittels des Ausrichtungselements 18 ausrichtbar ist, d.h. eine vorgegebene Ausrichtung einnimmt.

Der Gehäuseadapter 10 ist derart ausgestaltet und angeordnet, dass er den Prozessadapter 3 zumindest im Bereich der Referenzdruckmembran 9 umgibt und ein Zwischenraum 12 im Bereich der Referenzdruckmembran 9 zwischen dem Gehäuseadapter 10 und dem Prozessadapter 3 gebildet ist. Damit der Referenzdruck p2 in Form von Umgebungsluft auf die Referenzdruckmembran 9 einwirken kann, ist eine Durchgangsbohrung 13 im Gehäuseadapter 10 angeordnet, so dass der Zwischenraum 12 mit der Umgebung des Relativdruckmessaufnehmers 1 in Verbindung steht.

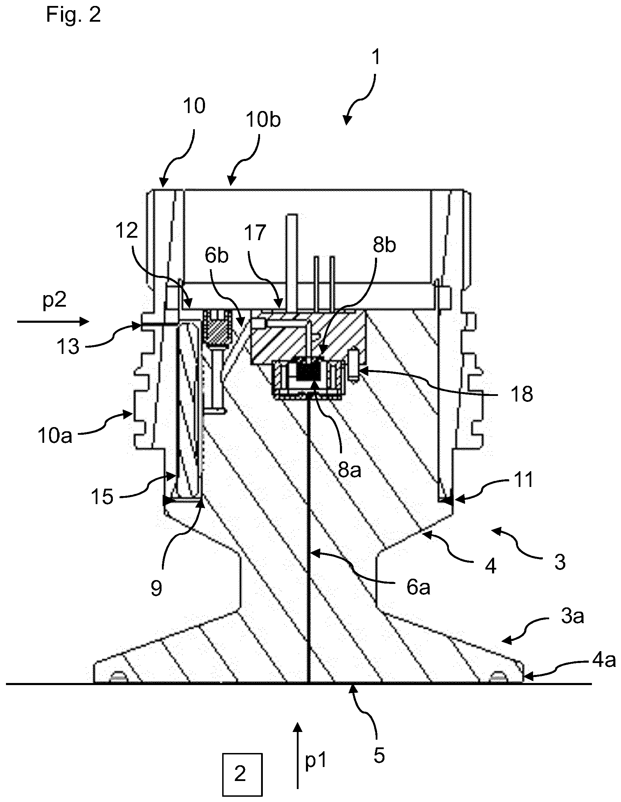

Zum Schutz gegen das Eindringen von Feuchtigkeit in den Zwischenraum 12 kann ein feuchteundurchlässiges Filterelement 14 im Bereich der Durchgangbohrung 13 angeordnet sein. Zusätzlich oder alternativ kann ein in Fig. 2 gezeigtes feuchteadsorbierendes Material 15 im Zwischenraum 12 angeordnet sein. Beispielsweise kann als feuchteadsorbierendes Material 15 ein Formkörper aus zumindest Zeolith und Polymermatrix vorgesehen sein.

### Bezugszeichenliste

- 1: Relativdruckmessaufnehmer
- 2: Medium
- 3: Prozessadapter
- 3a: erster Anschlussbereich
- 4: Grundkörper
- 4a: Endbereich des Grundkörpers
- 4b: zweiter Bereich des Grundkörpers
- 4c: Seitenfläche
- 4d: Ausnehmung des Grundkörpers
- 5: Prozessmembran
- 6a: erste Druckübertragungsleitung
- 6b: zweite Druckübertragungsleitung
- 8: Drucksensor
- 8a: erste Fläche
- 8b: zweite Fläche
- 9: Referenzdruckmembran
- 10: Gehäuseadapter
- 10a: zweiter Anschlussbereich
- 10b: Ausnehmung des Gehäuseadapters
- 11: Verbindungsbereich
- 12: Zwischenraum
- 13: Durchgangsbohrung
- 14: Filterelement
- 15: feuchteadsorbierendes Material
- 16: Gehäuse
- 17: Durchführungselement
- 18: Ausrichtungselement
- 19: Elektronikeinheit
- 20: Schweißung

## Patentansprüche

1. **Relativdruckmessaufnehmer** (1) zur Bestimmung eines ersten Drucks (p1) eines Mediums (2), mit
- einem Prozessadapter (3) mit einem Grundkörper (4),
∘ wobei in einem ersten, dem Medium (2) zugewandten Endbereich (4a) des Grundkörpers (4) eine druckempfindliche Prozessmembran (5) vorgesehen ist, wobei der Grundkörper (4) eine erste Druckübertragungsleitung (6a) aufweist, welche dazu ausgestaltet ist, den ersten Druck (p1) des Mediums (2) von der Prozessmembran (5) zu einem in einer Ausnehmung (4d) des Grundkörpers (4) angeordneten Drucksensor (8) zu führen und eine erste Fläche (8a) des Drucksensors (8) mit dem ersten Druck (p1) des Mediums (2) zu beaufschlagen,
∘ wobei in einem zweiten, vom Medium (2) beabstandeten Bereich (4b) des Grundkörpers (4) eine druckempfindliche Referenzdruckmembran (9) vorgesehen ist, welche mit einem in der Umgebung des Relativdruckmessaufnehmers (1) vorhandenen Referenzdruck (p2) beaufschlagt ist, wobei der Grundkörper (4) eine zweite Druckübertragungsleitung (6b) aufweist, welche dazu ausgestaltet ist, den Referenzdruck (p2) von der Referenzdruckmembran (9) zum Drucksensor (8) zu führen und eine zweite Fläche (8b) des Drucksensors (8) mit dem Referenzdruck (p2) zu beaufschlagen, und
- einem Gehäuseadapter (10), welcher dazu ausgestaltet ist, den Prozessadapter (3) zumindest im Bereich der Referenzdruckmembran (9) zu umgeben und in zumindest einem Verbindungsbereich (11) mit dem Prozessadapter (3) verbunden ist,
∘ wobei der Gehäuseadapter (10) derart zum Prozessadapter (3) angeordnet ist, dass im Bereich der Referenzdruckmembran (9) ein Zwischenraum (12) zwischen dem Gehäuseadapter (10) und dem Prozessadapter (3) gebildet ist,
∘ wobei eine Durchgangsbohrung (13) im Gehäuseadapter (10) angeordnet ist, welche den Zwischenraum (12) mit der Umgebung des Relativdruckmessaufnehmers (1) verbindet,
∘ **dadurch gekennzeichnet, dass** der Gehäuseadapter (10) einen zweiten Anschlussbereich (10a) aufweist, welcher für eine Verbindung mit einem Gehäuse (16) ausgestaltet ist.

2. Relativdruckmessaufnehmer nach Anspruch 1,
wobei ein feuchteundurchlässiges Filterelement (14) im Bereich der Durchgangsbohrung (13) angeordnet ist.

3. Relativdruckmessaufnehmer nach mindestens einem der Ansprüche 1-2, wobei ein feuchteadsorbierendes Material (15) im Zwischenraum (12) angeordnet ist.

4. Relativdruckmessaufnehmer nach Anspruch 3,
wobei als feuchteadsorbierendes Material (15) ein Formkörper vorgesehen ist, welcher eine Polymermatrix und Zeolith umfasst.

5. Relativdruckmessaufnehmer nach mindestens einem der Ansprüche 1-4, wobei die Referenzdruckmembran (9) im Wesentlichen senkrecht zur Prozessmembran (5) an einer Seitenfläche (4c) des Grundkörpers (4) des Prozessadapters (3) angeordnet ist.

6. Relativdruckmessaufnehmer nach mindestens einem der Ansprüche 1-5, wobei der Prozessadapter (3) einen ersten Anschlussbereich (3a) aufweist, welcher für eine Verbindung mit einem Prozessanschluss ausgestaltet ist.

7. Relativdruckmessaufnehmer nach mindestens einem der Ansprüche 1-6, wobei ein elektrisch isolierend ausgestaltetes Durchführungselement (17) benachbart zu der mit dem Referenzdruck (p2) beaufschlagten zweiten Fläche (8b) des Drucksensors (8) angeordnet ist, wobei die zweite Druckübertragungsleitung (6b) durch das Durchführungselement (17) führt.

8. Relativdruckmessaufnehmer nach Anspruch 7,
wobei das Durchführungselement (17) eine Glas-Metall-Durchführung ist.

9. Relativdruckmessaufnehmer nach mindestens einem der Ansprüche 7-8,
wobei ein Ausrichtungselement (18) vorgesehen ist, welches derart angeordnet und ausgestaltet ist, dass das Durchführungselement (17) mittels des Ausrichtungselements (18) relativ zum Grundkörper (4) ausrichtbar ist.

10. Relativdruckmessaufnehmer nach Anspruch 9,
wobei das Ausrichtungselement (18) ein Stift ist.

11. Relativdruckmessaufnehmer nach mindestens einem der Ansprüche 1-10, wobei in einer Ausnehmung (10b) des Gehäuseadapters (10) mindestens eine Elektronikeinheit (19) angeordnet ist.

12. Relativdruckmessaufnehmer nach mindestens einem der Ansprüche 1-11, wobei die Prozessmembran (5) und/oder die Referenzdruckmembran (9) mittels einer Schweißung (20) mit dem Grundkörper (4) verbunden sind.

13. Relativdruckmessaufnehmer nach mindestens einem der Ansprüche 1-12, wobei der Gehäuseadapter (10) in dem zumindest einem Verbindungsbereich (11) gasdicht mit dem Prozessadapter (3) verbunden ist.

## Claims

1. A relative pressure transducer (1) for determining a first pressure (p1) of a medium (2), with
- a process adapter (3) with a basic body (4),
• wherein a pressure-sensitive process membrane (5) is provided in a first end area (4a) of the basic body (4) facing toward the medium (2), wherein the basic body (4) has a first pressure transmission line (6a), which is configured to conduct the first pressure (p1) of the medium (2) from the process membrane (5) to a pressure sensor (8) arranged in a recess (4d) of the basic body (4) and to apply the first pressure (p1) of the medium (2) to a first surface (8a) of the pressure sensor (8),
• wherein a pressure-sensitive reference pressure membrane (9) is provided in a second area (4b) of the basic body (4) located at a distance from the medium (2), to which a reference pressure (p2) present around the relative pressure transducer (1) is applied, wherein the basic body (4) has a second pressure transmission line (6b), which is configured to conduct the reference pressure (p2) from the reference pressure membrane (9) to the pressure sensor (8) and to apply the reference pressure (p2) to a second surface (8b) of the pressure sensor (8),
- a housing adapter (10), which is configured to surround the process adapter (3) at least in the area of the reference pressure membrane (9) and is connected to the process adapter (3) at least in one connecting area (11),
• wherein the housing adapter (10) is arranged relative to the process adapter (3) in such a way that a gap (12) is formed between the housing adapter (10) and the process adapter (3) in the area of the reference pressure membrane (9),
• wherein a through-hole (13) is arranged in the housing adapter (10), which connects the gap (12) to the area around the relative pressure transducer (1),
• **characterized in that**
the housing adapter (10) has a second connecting area (10a) which is designed for a connection to a housing (16).

2. The relative pressure transducer as claimed in claim 1,
wherein a filter element (14) impermeable to moisture is arranged in the area of the through-hole (13).

3. The relative pressure transducer as claimed in at least one of claims 1 and 2,
wherein a moisture-adsorbing material (15) is arranged in the gap (12).

4. The relative pressure transducer as claimed in claim 3,
wherein a molded body comprising a polymer matrix and zeolite is provided as the moisture-adsorbing material (15).

5. The relative pressure transducer as claimed in at least one of claims 1 to 4,
wherein the reference pressure membrane (9) is arranged mostly perpendicular to the process membrane (5) on a lateral surface (4c) of the basic body (4) of the process adapter (3).

6. The relative pressure transducer as claimed in at least one of claims 1 to 5,
wherein the process adapter (3) has a first connecting area (3a) which is designed for a connection to a process connection.

7. The relative pressure transducer as claimed in at least one of claims 1 to 6,
wherein an electrically insulating feed-through element (17) is arranged adjacent to the second surface (8b) of the pressure sensor (8) to which the reference pressure (p2) is applied, wherein the second pressure transmission line (6b) leads through the feed-through element (17).

8. The relative pressure transducer as claimed in claim 7,
wherein the feed-through element (17) is a glass-to-metal seal.

9. The relative pressure transducer as claimed in at least one of claims 7 and 8,
wherein an alignment element (18) is provided, which is arranged and configured in such a way that the feed-through element (17) can be aligned relative to the basic body (4) using the alignment element (18).

10. The relative pressure transducer as claimed in claim 9,
wherein the alignment element (18) is a pin.

11. The relative pressure transducer as claimed in at least one of claims 1 to 10,
wherein at least one electronic unit (19) is arranged in a recess (10b) of the housing adapter (10).

12. The relative pressure transducer as claimed in at least one of claims 1 to 11,
wherein the process membrane (5) and/or the reference pressure membrane (9) is/are connected to the basic body (4) by means of a welded bond (20).

13. The relative pressure transducer as claimed in at least one of claims 1 to 12,
wherein the housing adapter (10) has a gas-tight connection to the process adapter (3) in the at least one connecting area (11).

## Revendications

1. Capteur de pression relative (1) destiné à la détermination d'une première pression (p1) d'un produit (2), avec
- un adaptateur de process (3) muni d'un corps de base (4),
∘ pour lequel une membrane de process (5) sensible à la pression est prévue dans une première zone d'extrémité (4a) du corps de base (4) tournée vers le produit (2),
le corps de base (4) comportant une première conduite de transmission de pression (6a), laquelle est conçue pour acheminer la première pression (p1) du produit (2) à partir de la membrane de process (5) vers un capteur de pression (8) disposé dans un évidement (4d) du corps de base (4), et pour appliquer la première pression (p1) du produit (2) sur une première surface (8a) du capteur de pression (8),
∘ pour lequel une membrane de pression de référence (9) sensible à la pression est prévue dans une deuxième zone (4b) du corps de base (4), espacée du produit (2), laquelle membrane est soumise à une pression de référence (p2) présente à proximité du capteur de pression relative (1), le corps de base (4) comportant une deuxième conduite de transmission de pression (6b), laquelle est conçue pour acheminer la pression de référence (p2) de la membrane de pression de référence (9) vers le capteur de pression (8) et pour appliquer la pression de référence (p2) sur une deuxième surface (8b) du capteur de pression (8), et
- un adaptateur de boîtier (10), lequel est conçu pour entourer l'adaptateur de process (3) au moins au niveau de la membrane de pression de référence (9) et lequel adaptateur de boîtier est relié à l'adaptateur de process (3) dans au moins une zone de raccordement (11),
∘ pour lequel l'adaptateur de boîtier (10) est disposé par rapport à l'adaptateur de process (3) de telle sorte qu'un espace intermédiaire (12) soit formé entre l'adaptateur de boîtier (10) et l'adaptateur de process (3) dans la zone de la membrane de pression de référence (9),
∘ pour lequel un alésage traversant (13) est réalisé dans l'adaptateur de boîtier (10), lequel alésage relie l'espace intermédiaire (12) à l'environnement du capteur de pression relative (1),
∘ **caractérisé en ce que** l'adaptateur de boîtier (10) comporte une deuxième zone de raccordement (10a), laquelle est conçue pour être raccordée à un boîtier (16).

2. Capteur de pression relative selon la revendication 1,
pour lequel un élément filtrant imperméable à l'humidité (14) est disposé dans la zone de l'alésage traversant (13).

3. Capteur de pression relative selon au moins l'une des revendications 1 à 2, pour lequel un matériau adsorbant l'humidité (15) est disposé dans l'espace intermédiaire (12).

4. Capteur de pression relative selon la revendication 3,
pour lequel un corps moulé, qui comprend une matrice polymère et de la zéolite, est prévu comme matériau adsorbant l'humidité (15).

5. Capteur de pression relative selon au moins l'une des revendications 1 à 4, pour lequel la membrane de pression de référence (9) est disposée pour l'essentiel perpendiculairement à la membrane de process (5) sur une face latérale (4c) du corps de base (4) de l'adaptateur de process (3).

6. Capteur de pression relative selon au moins l'une des revendications 1 à 5, pour lequel l'adaptateur de process (3) comporte une première zone de raccordement (3a), laquelle est conçue pour être raccordée à un raccord process.

7. Capteur de pression relative selon au moins l'une des revendications 1 à 6, pour lequel un élément de traversée (17) électriquement isolant est disposé à proximité de la deuxième surface (8b) du capteur de pression (8) soumise à la pression de référence (p2), la deuxième conduite de transmission de pression (6b) traversant l'élément de traversée (17).

8. Capteur de pression relative selon la revendication 7,
pour lequel l'élément de traversée (17) est une traversée verre-métal.

9. Capteur de pression relative selon au moins l'une des revendications 7 à 8,
pour lequel un élément d'alignement (18) est prévu, lequel élément est disposé et conçu de telle sorte que l'élément de traversée (17) puisse être aligné par rapport au corps de base (4) à l'aide de l'élément d'alignement (18).

10. Capteur de pression relative selon la revendication 9,
pour lequel l'élément d'alignement (18) est une broche.

11. Capteur de pression relative selon au moins l'une des revendications 1 à 10,
pour lequel au moins une unité électronique (19) est disposée dans un évidement (10b) de l'adaptateur de boîtier (10).

12. Capteur de pression relative selon au moins l'une des revendications 1 à 11,
pour lequel la membrane de process (5) et/ou la membrane de pression de référence (9) sont reliées au corps de base (4) au moyen d'une soudure (20).

13. Capteur de pression relative selon au moins l'une des revendications 1 à 12,
pour lequel l'adaptateur de boîtier (10) est relié de manière étanche au gaz à l'adaptateur de process (3) dans l'au moins une zone de raccordement (11).
